# EUROPEAN PATENT APPLICATION

(11) **EP 4 243 166 A1**
(43) Date of publication of application: **13.09.2023**
(21) Application number: 22874233.4
(22) Date of filing: 23.05.2022
(51) Int. Cl.: H01M 50/147, H01M 50/30

(54) **END COVER ASSEMBLY, BATTERY CELL, BATTERY AND ELECTRICAL DEVICE**

(30) Priority: 28.09.2021 CN 202122363978 U
(71) Applicant: Contemporary Amperex Technology Co., Limited, Ningde, Fujian 352100 (CN)
(72) Inventor: ZHOU, Wenlin, Ningde, Fujian 352100 (CN); LI, Quankun, Ningde, Fujian 352100 (CN); YANG, Daowei, Ningde, Fujian 352100 (CN); WANG, Peng, Ningde, Fujian 352100 (CN)
(74) Representative: von Tietzen und Hennig, Nikolaus
(86) International application number: PCT/CN2022/094486
(87) International publication number: WO 2023/050835

(57) **Abstract**

The present application provides an end cover assembly, a battery cell, a battery, and an electrical apparatus. The end cover assembly is used for a battery cell and comprises: an end cover provided with a pressure relief through hole; a pressure relief mechanism connected to the end cover and covering the pressure relief through hole, and configured to be actuated to release the pressure inside the battery cell when the pressure reaches a threshold; and a reinforcing mechanism, located on a side of the end cover facing away from an electrode assembly of the battery cell, and covering at least a part of the pressure relief through hole. The reinforcing mechanism is at least connected to a portion of the end cover at two sides of the pressure relief through hole along a first direction to enhance the strength of the end cover at the pressure relief through hole, wherein the first direction is perpendicular to the thickness direction of the end cover. By means of the present application, the strength of the end cover can be enhanced, and the safety performance of the battery cell can be improved.

## Description

### Cross-Reference to Related Applications

The present application claims the priority of Chinese Patent Application No. 202122363978.2 filed on September 28, 2021 and entitled "END COVERASSEMBLY, BATTERY CELL, BATTERY AND ELECTRICAL APPARATUS", the disclosure of which is incorporated herein by reference in its entirety.

### Technical Field

The present application relates to the technical field of batteries, and more particularly to an end cover assembly, a battery cell, a battery, and an electrical apparatus.

### Background

Battery cells are widely used in electronic devices such as mobile phones, laptops, battery vehicles, electric vehicles, electric planes, electric ships, electric toy cars, electric toy ships, electric toy planes and electric tools. The battery cells may include nickel-cadmium battery cells, nickel-hydrogen battery cells, lithium-ion battery cells, secondary alkaline zinc-manganese battery cells, and the like.

In the development of battery technologies, in addition to improving the performance of the battery cells, safety is also an issue that cannot be ignored. If the safety of a battery cell cannot be guaranteed, the battery cell cannot be used. Therefore, how to enhance the safety of the battery cells is an urgent technical problem to be solved in the battery technologies.

### Summary of the Invention

The present application provides an end cover assembly, a battery cell, a battery, and an electrical apparatus, which can enhance the safety of the battery cell.

In a first aspect, an embodiment of the present application provides an end cover assembly for a battery cell, and the end cover assembly includes:
an end cover provided with a pressure relief through hole;
a pressure relief mechanism, connected to the end cover and covering the pressure relief through hole, and configured to be actuated to release the pressure inside the battery cell when the pressure reaches a threshold; and
a reinforcing mechanism, located on a side of the end cover facing away from an electrode assembly of the battery cell, and covering at least a part of the pressure relief through hole.

The reinforcing mechanism is at least connected to a portion of the end cover located at two sides of the pressure relief through hole along a first direction to enhance the strength of the end cover at the pressure relief through hole, where the first direction is perpendicular to the thickness direction of the end cover.

In the above technical solution, the pressure relief mechanism can be actuated to release the pressure inside the battery cell when the pressure reaches a threshold, so as to ensure the safety of the battery cell in case of thermal runaway. The reinforcing mechanism is at least connected to a portion of the end cover located at two sides of the pressure relief through hole along the first direction, which can enhance the strength of the end cover at the pressure relief through hole. As a result, the end cover is not prone to creep deformation when it is subjected to internal and external impact, which facilitates the protection of the pressure relief mechanism, reduces the creep deformation of the pressure relief mechanism, reduces the risk of premature actuation and pressure relief of the pressure relief mechanism under normal use conditions, and improves the reliability and safety performance of the battery cell during use.

In some embodiments, the reinforcing mechanism includes a connecting portion and a first convex portion. The connecting portion is connected to the end cover, and the first convex portion protrudes from the surface of the connecting portion facing away from the electrode assembly and is arranged opposite to the pressure relief through hole. The reinforcing mechanism is provided with a first concave portion recessed from the surface of the connecting portion facing the electrode assembly in a direction facing away from the electrode assembly at a position corresponding to the first convex portion.

In the above technical solution, the connecting portion is connected to the end cover, to enhance the strength of the end cover. In the solution, an avoidance space is formed between the first convex portion and the end cover by arranging the first convex portion and the first concave portion, so as to avoid the structure of the end cover at the pressure relief through hole. Moreover, when the gas generated inside the battery cell needs to be discharged to release the pressure, the pressure is buffered in the first concave portion and then discharged, to reduce the pressure of the gas upon discharge, reduce the impact on the outside of the battery cell, and effectively improve the safety performance.

In some embodiments, a second concave portion is formed on a side of the end cover facing away from the electrode assembly, and at least a part of the connecting portion is located in the second concave portion and connected to the end cover. In the embodiment of the present application, the second concave portion is provided, and a positioning structure is formed on the end cover at the second concave portion, at least a part of the connecting portion is located in the second concave portion, for promoting the positioning and assembly. In this embodiment, the size of the end cover assembly in the thickness direction can be reduced by providing the second concave portion, so as to increase the energy density of the battery.

In some embodiments, the end cover includes a body portion and a second convex portion. The second concave portion is formed on the body portion, the second convex portion protrudes from the surface of the body portion facing the electrode assembly, the pressure relief through hole penetrates through the second convex portion and the body portion, and the projection of the second convex portion in the thickness direction is at least partially overlapped with the projection of the second concave portion in the thickness direction. The second concave portion will reduce the local strength of the body portion. However, in this embodiment, the strength of the body portion at the position corresponding to the second concave portion is increased by providing the second convex portion, thus reducing the deformation of the end cover.

In some embodiments, a transition fillet is provided at the connection between the second convex portion and the body portion. In the embodiment of the present application, the smooth transition between the second convex portion and the body portion is beneficial to the reduction of the degree of stress concentration.

In some embodiments, the reinforcing mechanism further includes a conducting portion, which is disposed on the connecting portion and/or the first convex portion, and brings the pressure relief through hole into communication with the external space. In the embodiment of the present application, when the pressure generated inside the battery cell reaches a threshold, the pressure relief mechanism is actuated, and the pressure generated inside the battery cell can be released to the outside of the battery cell through the conducting portion.

In some embodiments, the conducting portion includes a first through hole disposed on a bottom wall of the first convex portion, wherein the first through hole and the pressure relief through hole are oppositely arranged and communicated. In the embodiment of the present application, the first through hole and the pressure relief through hole are arranged opposite to each other, so the pressure relief channel is relatively short, which facilitates rapid pressure release.

In some embodiments, the reinforcing mechanism further includes a blocking portion, which is disposed opposite to at least part of the first through hole and connected to the first convex portion. In an embodiment of the present application, the blocking portion can prevent the emissions in the battery cell being discharged out of the reinforcing mechanism when the battery cell releases the pressure.

In some embodiments, a plurality of blocking portions are provided, and the plurality of blocking portions are distributed at intervals along an extending track of the first through hole. one end of the blocking portion is connected to the first convex portion, and the other end of the blocking portion extends and converges toward the center of the first through hole. In the embodiment of the present application, the blocking portion not only can prevent the emissions from being discharged out of the battery cell, but also can strengthen the reinforcing mechanism, thereby further enhancing the strength of the end cover.

In some embodiments, two connecting portions are provided, which are respectively connected to two opposite ends of the first convex portion along the first direction, and the conducting portion includes an opening enclosed by the two connecting portions and the first convex portion in a second direction, where the first direction is perpendicular to the thickness direction, and the first direction and the second direction intersect. In the embodiment of the present application, the conducting portion and the pressure relief through hole are staggered. When the pressure is released, the gas changes the pressure relief direction and is buffered in the first concave portion, thereby reducing the damage to components outside the battery cell.

In some embodiments, the connection portion is arranged surrounding the first convex portion. In the embodiment of the present application, the surrounding arrangement can strengthen the end cover in the periphery of the pressure relief through hole.

In some embodiments, the end cover includes a first body portion and a first protruding portion. The first body portion has a first inner surface and a first outer surface oppositely arranged in its thickness direction, and the first protruding portion protrudes from the first outer surface toward a direction facing away from the electrode assembly. The first body portion is provided, at a position corresponding to the first protruding portion, with a first recessed portion that is recessed from the first inner surface in a direction facing away from the electrode assembly. The first recessed portion is configured to accommodate at least a part of the electrode assembly.

In the above technical solution, the first protruding portion can enhance the strength of the end cover, and the first recessed portion can increase the internal space of the battery cell, so as to increase the energy density of the battery.

In some embodiments, the first recessed portion has a first bottom surface; and in the thickness direction, the first bottom surface is farther away from the electrode assembly than the first outer surface. In the embodiment of the present application, the first concave portion is recessed into the first convex portion, to increases the recessed depth of the first concave portion, thereby increasing the space in the first concave portion for accommodating the electrode assembly.

In some embodiments, the end cover assembly further includes an insulator disposed on a side of the end cover facing the electrode assembly, and configured to isolate the end cover from the electrode assembly. The insulator includes a second body portion and a second protruding portion. The second body portion has a second inner surface and a second outer surface oppositely arranged in the thickness direction. The second outer surface faces the first inner surface, and the second protruding portion protrudes from the second outer surface in a direction facing away from the second body portion. The second body portion is provided, at a position corresponding to the second protruding portion, with a second recessed portion recessed from the second inner surface in a direction facing away from the electrode assembly. The first recessed portion is configured to accommodate the second recessed portion, and the second recessed portion is configured to accommodate at least a part of the electrode assembly.

In the above technical solution, the first recessed portion is recessed into the first protruding portion, to increase the recessed depth of the first recessed portion, and thus increase the internal space of the battery cell, so the space in the first recessed portion for accommodating the electrode assembly is increased, thereby further increasing the energy density of the battery.

In a second aspect, an embodiment of the present application provides a battery cell, including an end cover assembly according to any one of the embodiments in the first aspect of the present application.

In a third aspect, an embodiment of the present application provides a battery, including the battery cell according to any one of the embodiments in the second aspect.

In a fourth aspect, an embodiment of the present application provides an electrical apparatus, including a battery for providing electric energy provided in the third aspect of the present application.

### Description of Drawings

The features, advantages, and technical effects of the exemplary embodiments of the present application will be described below with reference to the accompanying drawings.
Fig. 1 is a schematic structural view of a vehicle provided in some embodiments of the present application;
Fig. 2 is a schematic exploded view of a battery provided in some embodiments of the present application;
Fig. 3 is a schematic structural view of a battery module shown in Fig. 2;
Fig. 4 is a schematic exploded view of a battery cell provided in some embodiments of the present application;
Fig. 5 is a schematic structural view of an end cover assembly provided in some embodiments of the present application;
Fig. 6 is a schematic cross-sectional view of the end cover assembly shown in Fig. 5, taken along the line A-A;
Fig. 7 is a schematic enlarged view of the end cover assembly shown in Fig. 6 at I;
Fig. 8 is a schematic exploded view of the end cover assembly shown in Fig. 5;
Fig. 9 is a schematic structural view of an end cover assembly provided in some other embodiments of the present application;
Fig. 10 is a schematic structural view of a reinforcing mechanism of an end cover assembly provided in some embodiments of the present application;
Fig. 11 is a partial cross-sectional view of the battery cell shown in Fig. 4;
Fig. 12 is a schematic enlarged view of the battery cell shown in Fig. 11 at II;

In the drawings, the figures are not drawn to actual scale.

Reference numerals in the drawings:
X. first direction; Y. second direction; Z. thickness direction; 1. vehicle; 2. battery; 3. controller; 4. motor; 5. box; 51. first box portion; 52. second box portion; 53. accommodating space; 6. battery module; 7. battery cell; 10. electrode assembly; 11. body portion; 12. tab portion; 13. current collecting member; 20. shell assembly; 21. case; 22. end cover assembly; 221. electrode terminal; 23. end cover; 231. body portion; 232. second convex portion; 233. second concave portion; 234. first body portion; 234a. first inner surface; 234b. first outer surface; 235. first protruding portion; 236. first recessed portion; 236a. first bottom surface; 221a. pressure relief through hole; 8. pressure relief mechanism; 9. reinforcing mechanism; 91. connecting portion; 92. first convex portion; 92a. bottom wall; 93. first concave portion; 94. conducting portion; 941. first through hole; 942. opening; 95. blocking portion; 14. insulator; 141. second body portion; 141a. second inner surface; 141b. second outer surface; 142. second protruding portion; 143. second recessed portion; 143a. second bottom surface.

### Detailed Description

To make the objective, technical solutions and advantages of the embodiments of the present application clearer, the technical solutions in the embodiments of the present application will be clearly described below with reference to the drawings in the embodiments of the present application. Obviously, the embodiments described are some of rather than all of the embodiments of the present application. Based on the examples in the present application, all other examples obtained by those of ordinary skill in the art without creative effort fall within the protection scope of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. In the specification, claims, and accompanying drawings of the present application, the terms such as "first" and "second" are intended to distinguish between different objects rather than indicate a particular order or primary-subordinate relationship.

Reference herein to "an embodiment" means that a particular feature, structure, or characteristic described in connection with the embodiment can be included in at least one embodiment of the present application. The appearance of this phrase anywhere in the specification does not necessarily refer to the same embodiment, or a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of various components in the embodiments of the application shown in the drawings, as well as the overall thickness, length, width and other dimensions of integrated device, are for illustrative purposes only, and should not constitute any limitations on the present application.

"Multiple" in the present application refers to two or more (including two).

In the present application, the battery cell may include a lithium ion secondary battery cell, a lithium ion primary battery cell, a lithium sulfur battery cell, a sodium/lithium ion battery cell, a sodium ion battery cell or a magnesium ion battery cell and so on, which will not be limited in the embodiments of the present application. The battery cell may be cylindrical, flat, rectangular, or in other shapes, which is also not limited in the embodiments of the present application. The battery cells are generally divided into three types according to the packaging manners: cylindrical battery cells, rectangular battery cells, and pouch battery cells, which are not limited in the embodiments of the present application.

The battery mentioned in the examples of the present application refers to a single physical module including one or more battery cells to provide a higher voltage and capacity. For example, the battery mentioned in the present application may include a battery module, a battery pack, or the like. The battery generally comprises a box for encapsulating one or more battery cells. The box can prevent liquids or other foreign matters from affecting the charging or discharging of the battery cells.

The battery cell includes an electrode assembly and an electrolyte solution, and the electrode assembly includes a positive electrode sheet, a negative electrode sheet, and a separator. The battery cell operates mainly relying on movement of metal ions between the positive electrode sheet and the negative electrode sheet. The positive electrode sheet comprises a positive electrode current collector and a positive electrode active material layer, where the positive electrode active material layer is coated on a surface of the positive electrode current collector. The positive electrode current collector includes a positive electrode current collector portion and a positive electrode tab protruding from the positive electrode current collector portion. The positive electrode current collector portion is coated with the positive electrode active material layer, and at least a part of the positive electrode tab is not coated with the positive electrode active material layer. Taking a lithium-ion battery cell as an example, the material of the positive electrode current collector may be aluminum, and the positive electrode active material layer includes a positive electrode active material that may be lithium cobalt oxide, lithium iron phosphate, ternary lithium, lithium manganate, or the like. The negative electrode sheet comprises a negative electrode current collector and a negative electrode active material layer, where the negative electrode active material layer is coated on a surface of the negative electrode current collector. The negative electrode current collector includes a negative electrode current collector portion and a negative electrode tab protruding from the negative electrode current collector portion. The negative electrode current collector portion is coated with the negative electrode active material layer, and at least a part of the negative electrode tab is not coated with the negative electrode active material layer. The material of the negative electrode current collector may be copper, and the negative electrode active material layer includes a negative electrode active material that may be carbon, silicon, or the like. In order to ensure that no fusing occurs when a large current passes, there are a plurality of positive electrode tabs which are stacked together, and there are a plurality of negative electrode tabs which are stacked together. The separator may be made from PP, PE, or the like. In addition, the electrode assembly may be of a wound structure or a stacked structure, which is not limited in the embodiments of the present application.

The battery cell may also include a shell assembly, having an accommodating cavity therein that is a closed space provided by the shell assembly for the electrode assembly and the electrolyte solution. The shell assembly includes a case and an end cover assembly. The case is a hollow structure with an opening at one side. The end cover assembly covers the opening of the case and forms a sealed connection to form an accommodating cavity for accommodating the electrode assembly and the electrolyte solution.

Many design factors, such as energy density, cycle life, discharge capacity, charge-discharge rate and other performance parameters, should be considered in the development of the battery technology. In addition, the safety performance of the battery also needs to be taken into account.

A pressure relief mechanism on the battery cell has an important impact on the safety of the battery. For example, when a short circuit, overcharge, or the like occurs, it may cause thermal runaway inside the battery cell, resulting in a sudden rise in pressure or temperature. In this case, internal pressure and temperature can be released through the actuation of the pressure relief mechanism to prevent explosion and fire of the battery cell.

The pressure relief mechanism refers to an element or component that is actuated to release the internal pressure when the internal pressure of the battery cell reaches a predetermined threshold. The design of the threshold varies according to different design requirements. The threshold may depend on the materials of one or more of the positive electrode sheet, the negative electrode sheet, the electrolyte solution, and the separator in the battery cell. The pressure relief mechanism may take the form of an explosion-proof valve, a gas valve, a pressure relief valve or a safety valve, etc., and may specifically adopt a pressure-sensitive or temperature-sensitive element or structure. That is, when the internal pressure or temperature of the battery cell reaches a predetermined threshold, the pressure relief mechanism performs an action or a weak structure provided in the pressure relief mechanism is damaged, so as to form an opening or channel for releasing the internal pressure.

The "actuate" mentioned in the present application means that the pressure relief mechanism is actuated or activated to a certain state, so that the internal pressure of the battery cell can be released. Actions produced by the pressure relief mechanism may include, but are not limited to, at least a part of the pressure relief mechanism being broken, crushed, torn or opened, and the like. When the pressure relief mechanism is actuated, high temperature and high pressure gas and flame produced due to reactions inside the battery cell may be discharged outward from the actuated portion. In this way, the pressure of the battery cell can be released under controllable pressure or temperature, so as to prevent potential more serious accidents.

The present inventors have found that, during the cycle of the battery cell, blast and pressure relief of the battery cell is performed even when the pressure inside the battery cell does not reach a set threshold, and thus the structure and use environment of the battery cell have been analyzed and studied. The present inventor found that the pressure relief mechanism of the battery cell has premature fatigue and aging, which leads to a decrease in the threshold of the pressure relief mechanism. When the internal pressure of the battery cell has not reached the previously preset pressure value, the pressure relief mechanism explodes in advance. After further research, it was found that the battery cell may also release gas during normal use, resulting in an increase in the internal pressure of the battery cell, which in turn causes deformation of the end cover. The deformation of the end cover will drive the deformation of the pressure relief mechanism, which causes the fatigue aging or even rupture of weak structures in the pressure relief mechanism, resulting in a decrease in the opening threshold of the pressure relief mechanism.

In view of this, the embodiment of the present application provides a technical solution. In this technical solution, an end cover assembly of a battery cell includes: an end cover provided with a pressure relief through hole; a pressure relief mechanism connected to the end cover and covering the pressure relief through hole, and configured to be actuated to release the pressure inside the battery cell when the pressure reaches a threshold; and a reinforcing mechanism, located on a side of the end cover facing away from an electrode assembly of the battery cell, and covering at least a part of the pressure relief through hole. The reinforcing mechanism is at least connected to a portion of the end cover at two sides of the pressure relief through hole along a first direction to enhance the strength of the end cover at the pressure relief through hole, where the first direction is perpendicular to the thickness direction of the end cover. The strength of the end cover with this structure is improved, especially the strength of the end cover at the pressure relief through hole, thereby reducing the deformation of the end cover at the pressure relief through hole, reducing the risk of actuation of the pressure relief mechanism when the internal pressure in the battery cell does not reach a threshold, and improving the safety performance of the battery cell.

The technical solution described in the embodiments of the present application is suitable for use with battery cells, batteries comprising a battery cell, and electrical apparatuses using the batteries.

The electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical apparatus is not specially limited in the embodiments of the present application.

In the following examples, for the convenience of description, the electrical apparatus is a vehicle.

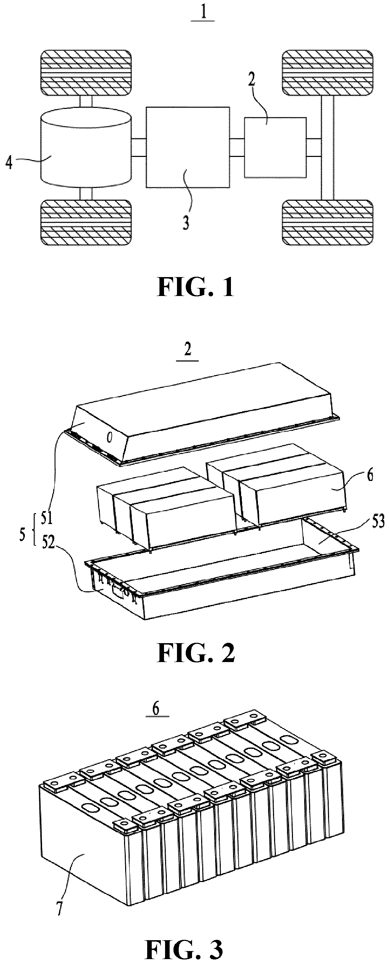

Fig. 1 is a schematic structural view of a vehicle provided in some embodiments of the present application. As shown in Fig. 1, the interior of a vehicle 1 is provided with a battery 2, and the battery 2 may be provided at the bottom or head or tail of the vehicle 1. The battery 2 may be configured to power the vehicle 1. for example, the battery 2 may be used as an operating power source of the vehicle 1.

The vehicle 1 may further include a controller 3 and a motor 4, where the controller 3 is used to control the battery 2 to power the motor 4, for example, to meet the operating power demand when the vehicle 1 is starting, navigating and driving.

In some examples of the present application, the battery 2 may not only be used as the operating power source of the vehicle 1, but also be used as a driving power source of the vehicle 1 to replace or partially replace fuel or natural gas to provide driving power for the vehicle 1.

Fig. 2 is a schematic exploded view of a battery provided in some embodiments of the present application. As shown in Fig. 2, a battery 2 includes a box 5 and a battery cell (not shown in Fig. 2) accommodated in the box 5.

The box 5 is configured to accommodate the battery cell, and the box 5 may be of various structures. In some embodiments, the box 5 may include a first box portion 51 and a second box portion 52. The first box portion 51 and the second box portion 52 are covered by each other, and the first box portion 51 and the second box portion 52 together define an accommodating space 53 for accommodating a battery cell. The second box portion 52 may be a hollow structure with one open end, the first box portion 51 may be a plate-like structure, and the first box portion 51 covers the open side of the second box portion 52, to form the boxy body 5 having an accommodating space 53. It is also possible that both the first box portion 51 and the second box portion 52 are a hollow structure with one open side, and the open side of the first box portion 51 covers the open side of the second box portion 52 to form the boxy body 5 having an accommodating space 53. Of course, the first box portion 51 and the second box portion 52 can be of various shapes, such as a cylinder or a cuboid.

In order to improve the airtightness after the first box portion 51 and the second box portion 52 are connected, a sealing member may also be provided between the first box portion 51 and the second box portion 52, such as a sealant, and a sealing ring, etc.

Assuming that the first box portion 51 covers the top of the second box portion 52, the first box portion 51 can also be called an upper box cover, and the second box portion 52 can also be called a lower box.

In the battery 2, one or more battery cells may be provided. If a plurality of battery cells are provided, the plurality of battery cells can be connected in series, in parallel or in parallel-series connection, where the hybrid pattern means that the plurality of battery cells are connected in both series and parallel. The plurality of battery cells may be directly connected in series or in parallel or in a hybrid pattern, and then the plurality of battery cells as one piece is accommodated in the box 5. Of course, the plurality of battery cells may be connected in series or in parallel or in parallel-series connection to form a battery module 6, and then a plurality of battery modules 6 is connected in series or in parallel or in a hybrid pattern into one piece and accommodated in the box 5.

Fig. 3 is a schematic structural view of a battery module shown in Fig. 2. As shown in Fig. 3, in some embodiments, a plurality of battery cells are provided and the plurality of battery cells is connected in series, or in parallel or in parallel-series connection to form a battery module 6. A plurality of battery modules 6 is connected in series or in parallel or in parallel-series connection into one piece, and accommodated in the box.

The plurality of battery cells in the battery module 6 may be electrically connected through a bus component, so as to realize parallel, serial or parallel-series connection of the plurality of battery cells in the battery module 6.

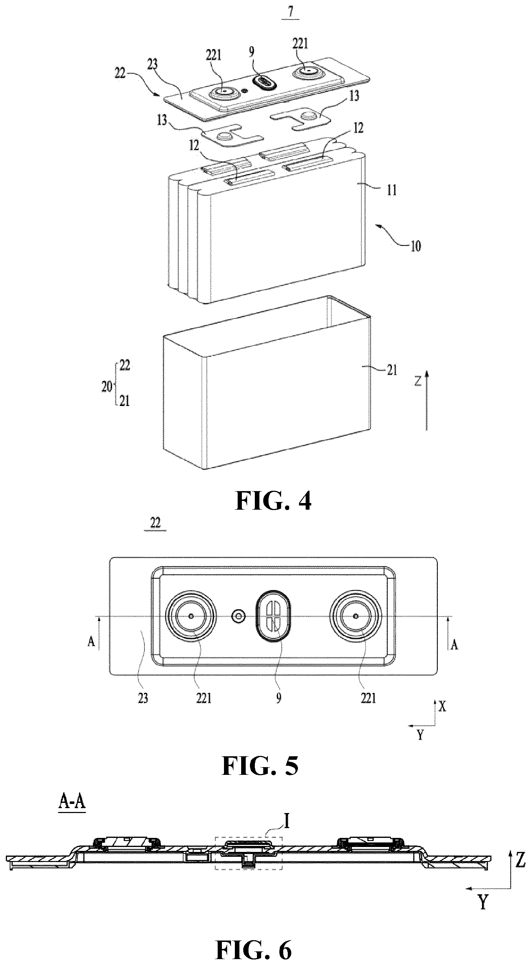

Fig. 4 is a schematic exploded view of a battery cell provided in some embodiments of the present application. As shown in Fig. 4, a battery cell 7 provided in the embodiment of the present application includes an electrode assembly 10 and a shell assembly 20, and the electrode assembly 10 is housed in the shell assembly 20.

In some embodiments, the shell assembly 20 may also be used to contain an electrolyte solution. The shell assembly 20 may be of various structural forms.

In some embodiments, the shell assembly 20 may include a case 21 and an end cover assembly 22. The case 21 is a hollow structure with an opening at one side. The end cover assembly 22 covers the opening of the case 21 and forms a sealed connection to form an accommodating cavity for accommodating the electrode assembly 10 and the electrolyte solution.

In some embodiments, the end cover assembly 22 includes an end cover 23, and the end cover 23 covers the opening of the case 21. The end cover 23 can be of various structures, for example, the end cover 23 is a plate-shaped structure, a hollow structure with one open end, and the like. Exemplarily, in Fig. 4, the case 21 has a rectangular structure, the end cover 23 is a plate-shaped structure, and the end cover 23 covers the opening at the top of the case 21.

The end cover 23 can be made of an insulating material (such as plastic), or can be made of a conductive material (such as metal). When the end cover 23 is made of a metal material, the end cover assembly 22 may further include an insulator (not shown in Fig. 4), located on a side of the end cover 23 facing the electrode assembly 10, so that the end cover 23 and the electrode assembly 10 are insulated.

In some embodiments, the end cover assembly 22 may further include an electrode terminal 221 installed on the end cover 23. There are two electrode terminals 221, and the two electrode terminals 221 are respectively defined as a positive electrode terminal and a negative electrode terminal. The positive electrode terminal and the negative electrode terminal are both electrically connected to the electrode assembly 10, to output electric energy produced by the electrode assembly 10.

In some other embodiments, the shell assembly 20 may also have other structures. For example, the shell assembly 20 include a case 21 and two end cover assemblies 22. The case 21 is a hollow structure with an opening at two opposing sides. One end cover assembly 22 correspondingly covers one opening of the case 21 and forms a sealed connection to form an accommodating cavity for accommodating the electrode assembly 10 and the electrolyte solution. In this structure, one end cover assembly 22 may be provided with two electrode terminals 221, while the other end cover assembly 22 may not be provided with the electrode terminal, or two end cover assemblies 22 may each be provided with one electrode terminal 221.

In the battery cell 7, one or more electrode assemblies 10 may be accommodated in the shell assembly 20. Exemplarily, in Fig. 4, there are four electrode assemblies 10.

The electrode assembly 10 includes a positive electrode sheet, a negative electrode sheet and a separator. The electrode assembly 10 may be a wound electrode assembly, a laminated electrode assembly, or an electrode assembly in other forms.

In some embodiments, the electrode assembly 10 is a wound electrode assembly. The positive electrode sheet, the negative electrode sheet, and the separator all have a strip-shaped structure. In an embodiment of the present application, the positive electrode sheet, the separator, and the negative electrode sheet may be stacked in sequence and wound for more than two turns to form the electrode assembly 10.

In some embodiments, the electrode assembly 10 is a laminated electrode assembly. Specifically, the electrode assembly 10 includes a plurality of positive electrode sheets and a plurality of negative electrode sheets. The positive electrode sheets and the negative electrode sheets are alternately stacked, in a direction parallel to the thickness direction of the positive electrode sheets and the thickness direction of the negative electrode sheets.

From the appearance of the electrode assembly 10, the electrode assembly 10 includes a body portion 11 and a tab portion 12 connected to the body portion 11. Exemplarily, the tab portion 12 extends from an end of the body portion 11 close to the end cover assembly 22.

In some embodiments, there are two tab portions 12, which are respectively defined as a positive electrode tab portion and a negative electrode tab portion. The positive electrode tab portion and the negative electrode tab portion may extend from the same end of the body portion 11, or may extend from opposite ends of the body portion 11 respectively.

The body portion 11 is a core part of the electrode assembly 10 to realize the charging and discharging function, and the tab portion 12 is used to lead out the current generated by the body portion 11. The body portion 11 includes a positive electrode current collector with a positive electrode current collector portion and a positive electrode active material layer, a negative electrode current collector with a negative electrode current collector portion and a negative electrode active material layer, and a separator. The positive electrode tab portion includes a plurality of positive electrode tabs, and the negative electrode tab portion includes a plurality of negative electrode tabs.

The tab portion 12 is used to be electrically connected to the electrode terminal 221. The tab portion 12 may be directly connected to the electrode terminal 221 by welding or the like, or may be indirectly connected to the electrode terminal 221 through other components. For example, the electrode assembly 10 further includes a current collecting member 13 for electrically connecting the electrode terminal 221 and the tab portion 12. There are two current collecting members 13, which are respectively defined as a positive electrode current collecting member and a negative electrode current collecting member. The positive electrode current collecting member is used to electrically connect the positive electrode terminal and the positive electrode tab portion, and the negative electrode current collecting member is used to electrically connect the negative electrode terminal and the negative electrode tab portion. When the battery cell 7 is provided with a plurality of electrode assemblies 10, the positive electrode current collecting members of the plurality of electrode assemblies 10 can be integrally arranged, and the negative electrode current collecting members of the plurality of electrode assemblies 10 can also be integrally arranged.

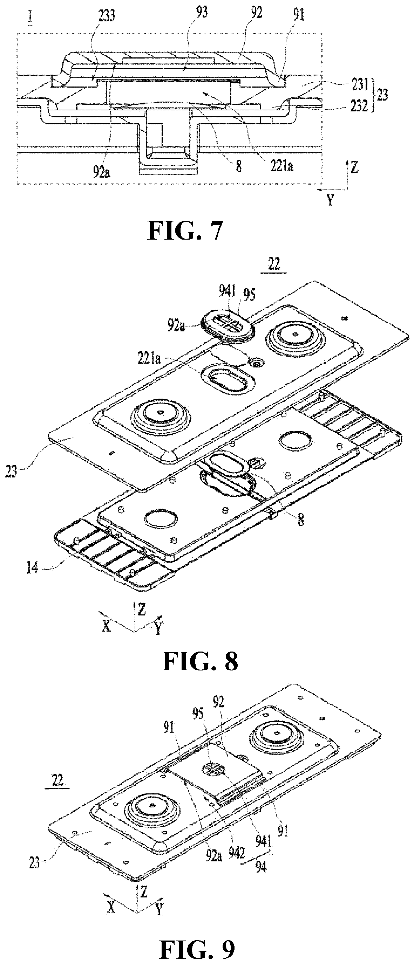

Fig. 5 is a schematic structural view of an end cover assembly provided in some embodiments of the present application. Fig. 6 is a schematic cross-sectional view of the end cover assembly shown in Fig. 5, taken along the line A-A. Fig. 7 is a schematic enlarged view of the end cover assembly shown in Fig. 6 at I.

In some embodiments, as shown in Figs. 5 to 7, the end cover assembly 22 includes: an end cover 23 provided with a pressure relief through hole 221a; a pressure relief mechanism 8 connected to the end cover 23 and covering the pressure relief through hole 221a, and configured to be actuated to release the pressure inside the battery cell when the pressure reaches a threshold; and a reinforcing mechanism 9, located on a side of the end cover 23 facing away from the electrode assembly of the battery cell, and covering at least a part of the pressure relief through hole 221a. The reinforcing mechanism 9 is at least connected to a portion of the end cover 23 at two sides of the pressure relief through hole 221a along a first direction X to enhance the strength of the end cover 23 at the pressure relief through hole 221a, where the first direction X is perpendicular to the thickness direction Z of the end cover 23.

It should be noted here that the X direction shown in Figs. 5 to 7 represents the first direction, the Y direction represents the second direction, and Z represents the thickness direction of the end cover 23. The first direction X and the second direction Y intersect, and the plane defined by the first direction X and the second direction Y is perpendicular to the thickness direction Z of the end cover 23. That is, the first direction X is perpendicular to the thickness direction Z of the end cover 23, and the second direction Y is perpendicular to the thickness direction Z of the end cover 23.

The end cover 23 can be made of an insulating material or a conductive material, and is used to isolate the electrolyte solution from the external environment. The end cover 23 can be used to mount the electrode terminal 221. The end cover 23 is provided with the pressure relief through hole 221a, and when the pressure relief mechanism 8 is actuated, the pressure inside the battery cell is released through the pressure relief through hole 221a.

The pressure relief mechanism 8 is actuated to release the internal pressure when the internal pressure of the battery cell reaches a threshold. When more gas is generated in the battery cell such that the internal pressure in the case rises and reaches a threshold, a weak structure provided in the pressure relief mechanism 8 is broken, thereby preventing the explosion of the battery cell. The weak structure refers to a portion of the pressure relief mechanism 8 which is weak in strength relative to other portions of the pressure relief mechanism 8 and tends to be broken, crushed, torn or opened. Exemplarily, a predetermined area of the pressure relief mechanism 8 is thinned, and the thinned portion forms a weak structure. Alternatively, material treatment is performed on a predetermined area of the pressure relief mechanism 8, so that the strength of the area is weaker than that of other areas. The area with low strength forms the weak structure.

The reinforcing mechanism 9 is at least connected to a portion of the end cover 23 located at two sides of the pressure relief through hole 221a along the first direction X to enhance the strength of the end cover 23 at the pressure relief through hole 221a. It can be understood that the reinforcing mechanism 9 may completely cover the pressure relief through hole, or partially cover the pressure relief through hole.

During the process of transportation, temperature change, or charging and discharging of the battery cell, changes of the pressure inside the battery cell, impact of the electrolyte solution on the end cover 23, and impact of external forces on the end cover 23 may occur to the battery cell. In the presence of one or more of the above-mentioned conditions of the battery cell, the end cover 23 will undergo creep deformation to a certain extent. Especially at a position on the end cover 23 where the pressure relief through hole 221a is provided, the possibility of creep deformation is higher due to the relatively poor strength. The creep deformation of the end cover 23 will drive the pressure relief mechanism 8 to undergo creep deformation, so that the pressure relief mechanism 8 may be actuated in advance when the pressure inside the battery cell does not reach the threshold, causing poor reliability and poor safety performance of the battery cells during use.

In an embodiment of the present application, the pressure relief mechanism 8 can be actuated to release the pressure inside the battery cell when the pressure reaches a threshold, so as to ensure the safety of the battery cell in case of thermal runaway. The reinforcing mechanism 9 is at least connected to a portion of the end cover 23 located at two sides of the pressure relief through hole 221a along the first direction X, which can enhance the strength of the end cover 23 at the pressure relief through hole 221a. As a result, the end cover 23 is not prone to creep deformation when it is subjected to internal and external impact, which facilitates the protection of the pressure relief mechanism 8, reduces the creep deformation of the pressure relief mechanism 8, reduces the risk of premature actuation and pressure relief of the pressure relief mechanism 8 under normal use conditions, and improves the reliability and safety performance of the battery cell during use.

In the embodiment of the present application, the reinforcing mechanism 9 is connected to the end cover 23 and can strengthen the end cover 23.

In some embodiments, the reinforcing mechanism 9 may be a plate-shaped structure. Exemplarily, the reinforcing mechanism 9 is disposed on a side of the end cover 23 facing away from the electrode assembly. To facilitate the pressure relief of the battery cell, a conducting portion, such as a conducting hole, can be provided on the reinforcing mechanism 9. The conducting hole communicates with the pressure relief through hole 221a, and the gas inside the battery cell is discharged through the pressure relief through hole 221a and conducting hole in sequence to the external environment.

As shown in Figs. 6 and 7, in some embodiments, the reinforcing mechanism 9 includes a connecting portion 91 and a first convex portion 92. The connecting portion 91 is connected to the end cover 23, and the first convex portion 92 protrudes from the surface of the connecting portion 91 facing away from the electrode assembly and is arranged opposite to the pressure relief through hole 221a. The reinforcing mechanism 9 is provided with a first concave portion 93 recessed from the surface of the connecting portion 91 facing the electrode assembly in a direction facing away from the electrode assembly at a position corresponding to the first convex portion 92.

The connecting portion 91 is connected to the end cover 23 to enhance the strength of the end cover 23. There are multiple ways to connect the connecting portion 91 and the end cover 23. Exemplarily, the connecting portion 91 is connected to a side of the end cover 23 facing away from the electrode assembly 10, or at least a part of the connecting portion 91 is located in the end cover 23 and connected to the end cover 23.

The reinforcing mechanism 9 is formed with the first concave portion 93, the first concave portion 93 is formed at a position corresponding to the first convex portion 92, and an avoidance space is formed between the first convex portion 92 and the end cover 23, so as to avoid the structure of the end cover 23 at the pressure relief through hole 221a. The first convex portion 92 is disposed opposite to the pressure relief through hole 221a, that is, the first concave portion 93 is disposed opposite to the pressure relief through hole 221a. When the gas generated inside the battery cell needs to be discharged to release the pressure, the pressure is buffered in the first concave portion 93 and then discharged, to reduce the pressure of the gas upon discharge, reduce the impact on the outside of the battery cell, and effectively improve the safety performance.

Since the first convex portion 92 protrudes from the connecting portion 91, the first convex portion 92 can strengthen the position where the first concave portion 93 is arranged on the end cover 23, thereby improving the strength of the end cover 23. Therefore, the structure of the end cover 23 becomes more stable. when the end cover 23 is subjected to internal and external impact, the end cover 23 is not prone to deformation, so as to ensure the reliability of the pressure relief mechanism 8 during use.

In an embodiment of the present application, the connecting portion 91 and the first convex portion 92 may be integrally formed, by for example, casting, forging or stamping. Alternatively, the connecting portion 91 and the first convex portion 92 may be separate structural members, both of which are processed and manufactured separately, and then assembled by welding or fastening.

To improve the assembly accuracy of the reinforcing mechanism 9, referring to Fig. 7, in some embodiments, a second concave portion 233 is formed on a side of the end cover 23 facing away from the electrode assembly, and at least a part of the connecting portion 91 is located in the second concave portion 233 and connected to the end cover 23. A positioning structure is formed on the end cover 23 at the second concave portion 233. at least a part of the connecting portion 91 is located in the second concave portion 233, for promoting the positioning and assembly. Exemplarily, the connecting portion 91 may be assembled on the end cover 23 by welding or bonding. Taking welding as an example, at least a part of the connecting portion 91 is located in the second concave portion 233, which can improve the positioning accuracy of the welding position of the connecting portion 91. In the embodiment of the present application, the size of the end cover assembly in the thickness direction Z can be reduced by providing the second concave portion 233, so as to increase the energy density of the battery.

Referring to Fig. 7 again, in some embodiments, the end cover 23 includes a body portion 231 and a second convex portion 232. The second concave portion 233 is formed on the body portion 231, the second convex portion 232 protrudes from the surface of the body portion 231 facing the electrode assembly, the pressure relief through hole 221a penetrates through the second convex portion 232 and the body portion 231, and the projection of the second convex portion 232 in the thickness direction Z of the end cover 23 is at least partially overlapped with the projection of the second concave portion 233 in the thickness direction Z of the end cover 23. The second concave portion 233 is formed in the body portion 231 to reduce the local strength of the body portion 231. In order to increase the strength of the body portion 231 at the corresponding position of the second concave portion 233, the projection of the second convex portion 232 in the thickness direction Z is at least partially overlapped with the projection of the second concave portion 233 in the thickness direction Z, and the second convex portion 232 will increase the thickness of the body portion 231 at the corresponding position of the second concave portion 233. The increase in thickness will enhance the strength of the body portion 231 and reduce the deformation of the body portion 231.

Since the second convex portion 232 protrudes from the body portion 231, stress concentration is likely to occur at the connection between the second convex portion 232 and the body portion 231. When the end cover 23 is subjected to internal and external impact, the connection of the second convex portion 232 and the body portion 231 is prone to breakage due to stress concentration, thus causing unstable structure of the end cover 23.

In order to improve the structural stability of the end cover 23, referring to Fig. 7, in some embodiments, a transitional fillet is provided at the connection between the second convex portion 232 and the body portion 231. Smooth transition between the second convex portion 232 and the body portion 231 is beneficial to the reduction of the degree of stress concentration and prevent fracture between the second convex portion 232 and the body portion 231.

Fig. 8 is a schematic exploded view of the end cover assembly shown in Fig. 5; and Fig. 9 is a schematic structural view of the end cover assembly provided in some other embodiments of the present application.

The reinforcing mechanism 9 can be arranged in various shapes. Exemplarily, as shown in Fig. 8, the reinforcing mechanism 9 may have a circular structure, and an oval structure, etc. The connecting portion 91 is arranged surrounding the first convex portion 92. The surrounding arrangement can strengthen the end cover 23 in the periphery of the pressure relief through hole 221a. As shown in Fig. 9, the reinforcing mechanism 9 may also be of a square structure, and two connecting portions 91 are provided. The two connecting portions 91 are respectively connected to the two ends of the first convex portion 92 along the first direction X.

As shown in Figs. 8 and 9, in some embodiments, the reinforcing mechanism 9 further includes a conducting portion 94, which is disposed on the connecting portion 91 and/or the first convex portion 92, and brings the pressure relief through hole 221a into communication with the external space. During the charging and discharging process of the battery cell, gas is also generated inside the battery cell, and the gas is discharged through the pressure relief through hole 221a and the conducting portion 94 in sequence, to prevent the increase in internal pressure due to excessive gas accumulation inside the battery cell. When the pressure generated inside the battery cell reaches a threshold, the pressure relief mechanism 8 is actuated, and the gas of high temperature and high pressure generated inside the battery cell can be released to the outside of the battery cell through the conducting portion 94.

For example, the conducting portion 94 includes a first through hole 941, disposed on a bottom wall 92a of the first convex portion 92, wherein the first through hole 941 and the pressure relief through hole 221a are oppositely arranged and communicated. The first through hole 941 and the pressure relief through hole 221a are arranged opposite to each other, so the pressure relief channel is relatively short, which facilitates rapid pressure release.

For another example, two connecting portions 91 are provided, which are respectively connected to two opposite ends of the first convex portion 92 along the first direction X, and the conducting portion 94 includes an opening 942 enclosed by the two connecting portions 91 and the first convex portion 92 in the second direction Y The conducting portion 94 and the pressure relief through hole 221a are staggered. When the pressure is released, the gas changes the pressure relief direction and is buffered in the first concave portion 93, thereby reducing the damage to components outside the battery cell.

When the pressure generated inside the battery cell reaches the threshold, the pressure relief mechanism 8 is actuated, and the high-temperature and high-pressure gas inside the battery cell will be discharged from the actuated part to release the pressure; during the discharging high-temperature and high-pressure gas, the gas will drive the emissions to be discharged, and the emissions will cause damage to the components outside the battery cell. In the embodiments of the present application, the emissions mentioned in the present application include, but are not limited to, dissolved or split positive and negative electrode sheets, fragments of the separator, and the like.

To reduce the damage to the components outside the battery cell when the pressure in the battery cell is released, referring to Figs. 8 and 9 again, in some embodiments, the reinforcing mechanism 9 further includes a blocking portion 95, where the blocking portion 95 is arranged opposite to at least a part of the conducting portion 94 and is connected with the first convex portion 92 or the connecting portion 91, so as to prevent the emissions in the battery cell being discharged out of the reinforcing mechanism 9 when the battery cell releases pressure. In this way, the pressure of the battery cell can be released under controllable pressure or temperature, and the discharge of emissions out of the reinforcing mechanism 9 is blocked, so as to prevent the occurrence of more serious accidents. The blocking portion 95 is connected to the first convex portion 92 or the connecting portion 91, and can also enhance the strength of the first convex portion 92 or the connecting portion 91.

The blocking portion 95 is arranged opposite to at least a part of the conducting portion 94 in various forms. Exemplarily, the blocking portion 95 is located in the conducting portion 94, or the blocking portion 95 is located on the side of the first convex portion 92 facing away from or facing the electrode assembly, and covers at least a part of the conducting portion 94; or the blocking portion 95 is located at least one of two opposite sides of the connecting portion 91 in its thickness direction, and covers at least a part of the conducting portion 94.

Referring to Figs. 8 and 9 again, in some embodiments, the blocking portion 95 is arranged opposite to at least part of the first through hole 941 and connected to the first convex portion 92. Since the first through hole 941 and the pressure relief through hole 221a are oppositely arranged, the emissions will directly impact the first through hole 941 when discharged, and the blocking portion 95 can effectively block the emissions, thereby improving the safety of the pressure relief process.

The blocking portion 95 may be located in the first through hole 941; of course, the blocking portion 95 may also be disposed on the surface of the first convex portion 92 facing away from the electrode assembly and/or on the surface facing the electrode assembly.

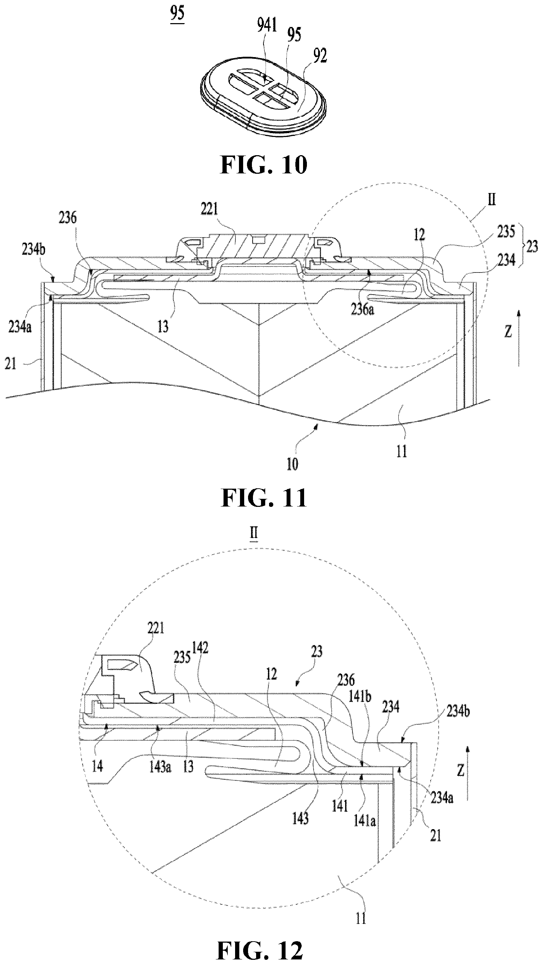

Fig. 10 is a schematic structural view of a reinforcing mechanism of an end cover assembly provided in some embodiments of the present application.

As shown in Fig. 10, optionally, a plurality of blocking portions 95 are provided, and the plurality of blocking portions 95 are distributed at intervals along the circumference of the first through hole 941. one end of the blocking portion 95 is connected to the first convex portion 92, and the other end of the blocking portion 95 extends and converges toward the center of the first through hole 941. When the number of the blocking portions 95 is four, the blocking portions 95 may be in the shape of a cross on the whole.

Optionally, the blocking portion 95 may have a mesh structure, and the blocking portion 95 covers the first through hole 941. The pressure inside the battery cell can be discharged through the mesh of the mesh structure, and the emissions in the battery cell will be blocked by the mesh structure, thereby improving the safety performance of the battery cell.

Fig. 11 is a partial cross-sectional view of the battery cell shown in Fig. 4; and Fig. 12 is a schematic enlarged view of the battery cell shown in Fig. 11 at II.

To further improve the strength of the end cover 23, as shown in Fig. 11, in some embodiments, the end cover 23 includes a first body portion 234 and a first protruding portion 235. The first body portion 234 has a first inner surface 234a and a first outer surface 234b oppositely arranged in the thickness direction Z of the end cover 23, and the first protruding portion 235 protrudes from the first outer surface 234b toward a direction facing away from the electrode assembly 10. The first body portion 234 is provided, at a position corresponding to the first protruding portion 235, with a first recessed portion 236 that is recessed from the first inner surface 234a in a direction facing away from the electrode assembly 10. The first recessed portion 236 is configured to accommodate at least a part of the electrode assembly 10.

Since the first body portion 234 of the end cover 23 is provided, at a position corresponding to the first protruding portion 235, with the first recessed portion 236 recessed from the first inner surface 234a in a direction facing away from the electrode assembly 10, the internal space in the battery cell is increased. The first recessed portion 236 can accommodate at least a part of the electrode assembly 10, for example, at least a part of the tab portion 12 and/or the current collecting member 13 of the electrode assembly 10, so as to provide more space for the electrode assembly 10, which is beneficial to the improvement of the energy density of the battery cell. In addition, the first protruding portion 235 can strengthen the position on the first body portion 234 where the first recessed portion 236 is disposed, thereby improving the strength of the end cover 23. The arrangement of the first protruding portion 235 can also allow the first recessed portion 236 to be recessed toward a direction facing away from the electrode assembly 10 as much as possible, which facilitate the accommodation of the current collecting member 13 and/or the tab portion 12 in the first recessed portion 236.

The first recessed portion 236 severs to accommodate the tab portion 12 of the electrode assembly 10. The first recessed portion 236 can accommodate only at least a part of the positive electrode tab, or accommodate only at least a part of the negative electrode tab. Of course, it can also accommodate at least a part of the positive electrode tab and at least a part of the positive electrode tab. For example, the positive electrode tab and the negative electrode tab are respectively located on two opposite sides of the body portion 11 of the electrode assembly 10 in the thickness direction Z of the end cover 23. If the positive electrode tab is closer to the end cover 23 than the negative electrode tab, the first recessed portion 236 can accommodate only at least a part of the positive electrode tab; and if the positive electrode tab is farther away from the end cover 23 than the negative electrode tab, the first recessed portion 236 can accommodate only at least a part of the negative electrode tab. For another example, if the positive electrode tab and the negative electrode tab are located on the same side of the body portion 11 of the electrode assembly 10 in the thickness direction Z of the first body portion 234, then the first recessed portion 236 can accommodate at least a part of the positive electrode tab and at least a part of the negative electrode tab.

Referring to Fig. 11 again, in some embodiments, the first recessed portion 236 has a first bottom surface 236a. In the thickness direction Z, the first bottom surface 236a is farther away from the electrode assembly 10 than the first outer surface 234b of the first body portion 234, such that the first recessed portion 236 is recessed into the first protruding portion 235 to increase the recessed depth of the first recessed portion 236, thereby increasing the space of the first recessed portion 236 for accommodating the tab portion 12.

In other embodiments, the first bottom surface 236a of the first recessed portion 236 can also be flush with the first outer surface 234b of the first body portion 234. In the thickness direction Z, the first bottom surface 236a may be closer to the electrode assembly 10 than the first outer surface 234b of the first body portion 234.

As shown in Fig. 12, in some embodiments, the end cover assembly 22 may further include an insulator 14 disposed on a side of the end cover 23 facing the body portion 11 of the electrode assembly, and configured to isolate the end cover 23 and electrode assembly (not shown in Fig. 12).

The insulator 14 severs to isolate the end cover 23 from the electrode assembly, to reduce the risk of short circuit of the battery cell caused by the contact between the end cover 23 and the electrode assembly.

In the embodiment of the present application, the insulator 14 is made of an insulating material, and the insulator 14 may be made of rubber, plastic or other materials. The end cover 23 may be made of an electrically conducting material, such as copper, iron, aluminum, stainless steel, aluminum alloys, and the like.

It should be noted that in the embodiment of the present application, when the end cover assembly 22 is not provided with the insulator 14, the end cover 23 may be made of an insulating material.

Referring to Fig. 12 again, in some embodiments, the insulator 14 may include a second body portion 141 and a second protruding portion 142. The second body portion 141 has a second inner surface 141a and a second outer surface 141b arranged opposite to each other in the thickness direction Z. The second outer surface 141b faces the first inner surface 234a, and the second protruding portion 142 protrudes from the second outer surface 141b toward the direction facing away from the electrode assembly. The second body portion 141 is provided, at a position corresponding to the second protruding portion 142, with a second recessed portion 143 recessed from the second inner surface 141a toward a direction facing away from the electrode assembly. The first recessed portion 236 is configured to accommodate the second protruding portion 142, and the second recessed portion 143 is configured to accommodate at least a part of the electrode assembly.

The second recessed portion 143 of the insulator 14 can increase the internal space of the battery cell and severs to accommodate the current collecting member 13 and the tab portion 12 of the electrode assembly, so as to provide more space for the body portion 11 of the electrode assembly. The arrangement of the second protruding portion 142 can allow the second recessed portion 143 to be recessed toward a direction facing away from the body portion 11 of the electrode assembly 10 as much as possible, which facilitate the accommodation of the tab portion 12 in the secondt recessed portion 143. In addition, since the second protruding portion 142 of the insulator 14 is accommodated in the first recessed portion 236, the insulator 14 and the end cover 23 are more compact, reducing the space occupied by the insulator 14 in the case 21. As a result, more space can be provided to the electrode assembly, which is conducive to improving the energy density of the battery cell.

The second recessed portion 143 includes a second bottom surface 143a, and the second bottom surface 143a is farther away from the electrode assembly 10 than the second outer surface 141b, so that the second recessed portion 143 is recessed into the second protruding portion 142.

It should be noted that the second protruding portion 142 of the insulator 14 may correspond to the first recessed portion 236 of the end cover 23. For example, one second protruding portion 142 is formed on the insulator 14, one first recessed portion 236 is formed on the end cover 23, and the one first protruding portion 235 is correspondingly accommodated in the first recessed portion 236. Two second protruding portions 142 are formed on the insulator 14, two first recessed portions 236 are formed on the end cover 23, and the two second protruding portions 142 are accommodated in the two first recessed portions 236 respectively. Of course, multiple second protruding portions 142 may also be accommodated in one first recessed portion 236. For example, one first recessed portion 236 is formed on the end cover 23, two second protruding portions 142 are formed on the insulator 14, and the two second protruding portions 142 are accommodated in the one first recessed portion 236.

There may be a certain distance between the second outer surface 141b and the first inner surface 234a, or the two may directly abut against each other. If there is a distance between the second outer surface 141b and the first inner surface 234a, the second protruding portion 142 is partially accommodated in the first recessed portion 236. If the second outer surface 141b abuts against the first inner surface 234a, the second protruding portion 142 is fully accommodated in the first recessed portion 236, making both the insulator 14 and the end cover 23 more compact. In Fig. 12, a situation where the second outer surface 141b directly abuts against the first inner surface 234a is exemplarily shown.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. An end cover assembly for a battery cell, comprising:
an end cover, provided with a pressure relief through hole;
a pressure relief mechanism, connected to the end cover and covering the pressure relief through hole, and configured to be actuated to release the pressure inside the battery cell when the pressure reaches a threshold; and
a reinforcing mechanism, located on a side of the end cover facing away from an electrode assembly of the battery cell, and covering at least a part of the pressure relief through hole,
wherein the reinforcing mechanism is at least connected to a portion of the end cover located at two sides of the pressure relief through hole along a first direction to enhance the strength of the end cover at the pressure relief through hole, where the first direction is perpendicular to the thickness direction of the end cover.

2. The end cover assembly according to claim 1, wherein
the reinforcing mechanism comprises a connecting portion and a first convex portion, wherein the connecting portion is connected to the end cover, and the first convex portion protrudes from the surface of the connecting portion facing away from the electrode assembly and is arranged opposite to the pressure relief through hole; and the reinforcing mechanism is provided with a first concave portion recessed from the surface of the connecting portion facing the electrode assembly in a direction facing away from the electrode assembly at a position corresponding to the first convex portion.

3. The end cover assembly according to claim 2, wherein
a second concave portion is formed on a side of the end cover facing away from the electrode assembly, and at least a part of the connecting portion is located in the second concave portion and connected to the end cover.

4. The end cover assembly according to claim 3, wherein
the end cover comprises a body portion and a second convex portion, wherein the second concave portion is formed on the body portion, and the second convex portion protrudes from the surface of the body portion facing the electrode assembly; the pressure relief through hole penetrates through the second convex portion and the body portion, and the projection of the second convex portion in the thickness direction is at least partially overlapped with the projection of the second concave portion in the thickness direction.

5. The end cover assembly according to claim 4, wherein a transition fillet is provided at the connection of the second convex portion and the body portion.

6. The end cover assembly according to any one of claims 2 to 5, wherein
the reinforcing mechanism further comprises a conducting portion, which is disposed on the connecting portion and/or the first convex portion and brings the pressure relief through hole into communication with the external space.

7. The end cover assembly according to claim 6, wherein
the conducting portion comprises a first through hole disposed on a bottom wall of the first convex portion, wherein the first through hole and the pressure relief through hole are oppositely arranged and communicated.

8. The end cover assembly according to claim 7, wherein
the reinforcing mechanism further comprises a blocking portion, which is disposed opposite to at least part of the first through hole and connected to the first convex portion, so as to prevent the emissions in the battery cell being discharged out of the reinforcing mechanism when the battery cell releases the pressure.

9. The end cover assembly according to claim 8, wherein
a plurality of blocking portions are provided, the plurality of blocking portions are distributed at intervals along the circumference of the first through hole, one end of the blocking portion is connected to the first convex portion, and the other end of the blocking portion extends and converges toward the center of the first through hole.

10. The end cover assembly according to any one of claims 6 to 9, wherein
two connecting portions are provided, which are respectively connected to two opposite ends of the first convex portion along the first direction, and the conducting portion comprises an opening enclosed by the two connecting portions and the first convex portion in a second direction, wherein the first direction is perpendicular to the thickness direction, and the first direction and the second direction intersect.

11. The end cover assembly according to any one of claims 2 to 9, wherein the connecting portion is disposed surrounding the first convex portion.

12. The end cover assembly according to any one of claims 1 to 11, wherein the end cover comprises a first body portion and a first protruding portion, wherein the first body portion has a first inner surface and a first outer surface oppositely arranged in its thickness direction, the first protruding portion protrudes from the first outer surface toward a direction facing away from the electrode assembly, the first body portion is provided, at a position corresponding to the first protruding portion, with a first recessed portion that is recessed from the first inner surface in a direction facing away from the electrode assembly, and the first recessed portion is configured to accommodate at least a part of the electrode assembly.

13. The end cover assembly according to claim 12, wherein the first recessed portion has a first bottom surface; and
in the thickness direction, the first bottom surface is farther from the electrode assembly than the first outer surface.

14. The end cover assembly according to claim 12 or 13, further comprising an insulator, wherein
the insulator is disposed on a side of the end cover facing the electrode assembly, and configured to isolate the end cover from the electrode assembly; and
the insulator comprises a second body portion and a second protruding portion, in which the second body portion has a second inner surface and a second outer surface oppositely arranged in the thickness direction, the second outer surface faces the first inner surface, the second protruding portion protrudes from the second outer surface in a direction facing away from the second body portion, and the second body portion is provided, at a position corresponding to the second protruding portion, with a second recessed portion recessed from the second inner surface toward a direction facing away from the electrode assembly; and
the first recessed portion is configured to accommodate the second recessed portion configured to accommodate at least a part of the electrode assembly.

15. A battery cell, comprising: the end cover assembly according to any one of claims 1 to 14.

16. A battery, comprising a plurality of battery cells according to claim 15.

17. An electrical apparatus, comprising the battery according to claim 16, wherein the battery is configured to provide electric energy.
